# EUROPEAN PATENT APPLICATION

(11) **EP 4 199 151 A1**
(43) Date of publication of application: **21.06.2023**
(21) Application number: 21886474.2
(22) Date of filing: 07.06.2021
(51) Int. Cl.: H01M 4/525, H01M 4/505, H01M 4/36, H01M 4/62, H01M 10/052

(54) **CATHODE ACTIVE MATERIAL AND LITHIUM SECONDARY BATTERY COMPRISING SAME**

(30) Priority: 26.10.2020 KR 20200139117
(71) Applicant: ECOPRO BM CO., LTD., Cheongju-si, Chungcheongbuk-do 28116 (KR)
(72) Inventor: NOH, Hyung Joo, Chungcheongbuk-do 28116 (KR); YUN, Jin Kyeong, Chungcheongbuk-do 28116 (KR); YUN, Mi Hye, Chungcheongbuk-do 28116 (KR); JEON, Jae Woo, Chungcheongbuk-do 28116 (KR); KIM, Ju Chul, Chungcheongbuk-do 28116 (KR); JANG, Ye Ri, Chungcheongbuk-do 28116 (KR); SON, Jin Oh, Chungcheongbuk-do 28116 (KR); SUH, Jun Won, Chungcheongbuk-do 28116 (KR); CHOI, Moon Ho, Chungcheongbuk-do 28116 (KR)
(74) Representative: BCKIP Part mbB
(86) International application number: PCT/KR2021/007098
(87) International publication number: WO 2022/092475

(57) **Abstract**

The present invention relates to a positive electrode active material and a lithium secondary battery using a positive electrode comprising the same, and more particularly, to a positive electrode active material which has improved electrochemical properties and improved stability by controlling a pore area and a pore shape of a lithium composite oxide included in the positive electrode active material by adjusting the proportions of ammonia and caustic soda, used in co-precipitation for synthesizing a precursor of the positive electrode active material, and a lithium secondary battery using a positive electrode containing the positive electrode active material.

## Description

### [Technical Field]

The present invention relates to a positive electrode active material and a lithium secondary battery using a positive electrode comprising the same, and more particularly, to a positive electrode active material which has improved electrochemical properties and improved stability by controlling a pore area and a pore shape of a lithium composite oxide included in the positive electrode active material by adjusting the proportions of ammonia and caustic soda, used in co-precipitation for synthesizing a precursor of the positive electrode active material, and a lithium secondary battery using a positive electrode containing the positive electrode active material.

### [Background Art]

Batteries store electrical power by using materials facilitating an electrochemical reaction at a positive electrode and a negative electrode. As a representative example of such batteries, there is a lithium secondary battery storing electrical energy by means of a difference in chemical potential when lithium ions are intercalated/deintercalated into/from a positive electrode and a negative electrode.

The lithium secondary battery uses materials enabling reversible
intercalation/deintercalation of lithium ions as positive electrode and negative electrode active materials, and is manufactured by charging a liquid organic electrolyte or a polymer electrolyte between the positive electrode and the negative electrode.

As a positive electrode active material of the lithium secondary battery, a lithium composite oxide may be used, and for example, composite oxides such as LiCoO₂, LiMn₂O₄, LiNiO₂, and LiMnO₂ are being studied.

Among the positive electrode active materials, LiCoO₂ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while a LiNiO₂-based positive electrode active material exhibits a battery characteristic such as a high discharge capacity, due to cation mixing between Li and a transition metal, it is difficult to synthesize the LiNiO₂-based positive electrode active material, thereby causing a big problem in rate characteristics.

In addition, depending on the intensification of such cation mixing, a large amount of Li by-products is generated. Since most of the Li by-products consist of LiOH and Li₂CO₃, they may cause gelation in preparation of a positive electrode paste or cause gas generation according to repeated charge/discharge after the manufacture of an electrode. Residual Li₂CO₃ not only increases cell swelling to reduce the number of cycles, but also causes the swelling of a battery.

Meanwhile, fine pores may be present in a lithium composite oxide constituting a positive electrode active material. Due to the presence of pores in the lithium composite oxide, a liquid electrolyte may pass through, and thus the electrochemical properties of the lithium composite oxide can be exhibited. However, when there are too many pores in the lithium composite oxide (normally, porosity measured from a cross-sectional scanning electron microscope (SEM) image is referred to as an indicator), rather, the possibility of side reactions between the lithium composite oxide and the liquid electrolyte increases, so there is a risk of reduced stability.

Accordingly, there has been attempts to achieve both electrochemical properties and stability of the lithium composite oxide by controlling the porosity of the lithium composite oxide. However, since the shapes of pores observed from the cross-sectional SEM image of the lithium composite oxide are all different, there is a limitation that simply controlling porosity is only to the extent that it improves the stability of the lithium composite oxide.

### [Disclosure]

### [Technical Problem]

The present invention is directed to providing a positive electrode active material having improved electrochemical properties and stability to solve various problems of a conventional positive electrode active material for a lithium secondary battery.

Particularly, the present applicants confirmed that the pore area and the pore shape of the lithium composite oxide can be controlled by adjusting the proportions of ammonia and caustic soda, used in co-precipitation for synthesizing a precursor of a lithium composite oxide constituting the positive electrode active material. In this way, the electrochemical properties and stability of the cathode activity material may be further improved by more actively controlling the pore area and size, rather than simply controlling the porosity or average diameter of the pores in the lithium composite oxide.

Therefore, the present invention is directed to providing a positive electrode active material having improved electrochemical properties and improved stability by controlling the pore area and the pore shape of a lithium composite oxide included in the positive electrode active material by adjusting the proportions of ammonia and caustic soda, used in co-precipitation for synthesizing a precursor of the positive electrode active material.

The present invention is also directed to providing a positive electrode comprising the positive electrode active material defined herein.

Moreover, the present invention is directed to providing a lithium secondary battery using the positive electrode defined herein.

### [Technical Solution]

One aspect of the present invention provides a positive electrode active material comprising a lithium composite oxide, which is represented by Formula 1 below and capable of lithium intercalation/deintercalation.

[Formula 1] Li_{w}Ni_{1-(x+y+z)}CoₓM1_{y}M2_{z}O_{2+α}

Wherein,
M1 is at least one selected from Mn and Al,
M2 is at least one selected from Mn, P, Sr, Ba, B, Ti, Zr, Al, Hf, Ta, Mg, V, Zn, Si, Y, Sn, Ge, Nb, W, and Cu,
M1 and M2 are elements different from each other,
0.5<w<1.5, 0≤x≤0.50, 0≤y≤0.20, 0≤z≤0.20, and 0≤α≤0.02.

Wherein, the average value of the ratio (b/a) of the major axis length (b) of a pore to the minor axis length (a) of the pore, observed from a cross-sectional scanning electron microscope (SEM) image of the lithium composite oxide, may be 1 to 3.

In addition, when the average particle diameter (D50) of the lithium composite oxide is d, the average value of the major axis lengths (b) of pores observed from a cross-sectional SEM image of the lithium composite oxide may be less than 0.15d. That is, the average value of the major axis lengths (b) of pores is preferably less than 15% of the average particle diameter (D50) of the lithium composite oxide. Wherein, the average particle diameter (D50) of the lithium composite oxide is the average particle diameter (D50) of the lithium composite oxide as a secondary particle.

In addition, an alloy oxide represented by Formula 2 below may be further included on at least a part of the surface of the lithium composite oxide.

[Formula 2] LiₐM3_{b}O_{c}

Wherein,
M3 is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Gd, and Nd,
0≤a≤10, 0<b≤8, and 2≤c≤13.

Another aspect of the present invention provides a positive electrode comprising the above-described positive electrode active material.

Still another aspect of the present invention provides a lithium secondary battery using the above-described positive electrode.

### [Advantageous Effects]

According to the present invention, a lithium composite oxide in which a pore area and a pore shape are controlled by adjusting the proportions of ammonia and caustic soda, used in co-precipitation for synthesizing a precursor of the lithium composite oxide constituting the positive electrode active material, can be obtained, and as a positive electrode active material comprising the lithium composite oxide with the controlled pore area and shape is used, various electrochemical properties such as capacity, lifespan, and charge/discharge efficiency, which are important indicators for evaluating the performance of a lithium secondary battery, can be improved.

In addition, as described above, when a pore area and a pore shape are controlled and the porosity of the lithium composite oxide is also controlled, a better synergistic effect of the above-described electrochemical properties can be expected.

Meanwhile, using the conventionally introduced method of controlling the porosity of the lithium composite oxide, stability may be improved by inhibiting a side reaction between the lithium composite oxide and the liquid electrolyte, but there was a limitation in that it was insufficient in terms of improving the particle strength of the lithium composite oxide or inhibiting crack generation during charge/discharge.

However, as introduced in the present invention, when a pore area and a pore shape are controlled by adjusting the proportions of ammonia and caustic soda, used in co-preparation, the particle strength of the lithium composite oxide and the inhibition of crack generation can be enhanced. Likewise, when porosity is controlled along with the pore area and pore shape of the lithium composite oxide, a synergistic effect on the stability of the lithium composite oxide, described above, can be expected.

### [Modes of the Invention]

Hereinafter, a positive electrode active material according to the present invention, a positive electrode comprising the positive electrode active material, and a lithium secondary battery using the positive electrode will be described in detail.

### Positive electrode active material

According to one embodiment of the present invention, a positive electrode active material comprising a lithium composite oxide capable of lithium intercalation/deintercalation is provided.

The lithium composite oxide may be single-crystal or polycrystalline oxide particles, and preferably, polycrystalline particles. The polycrystalline lithium composite oxide refers to an aggregate that includes primary particles and secondary particles in which a plurality of the primary particles are aggregated.

The primary particle refers to one grain (or crystallite), and the secondary particle refers to an aggregate formed by aggregating a plurality of primary particles. There may be a pore and/or a grain boundary between the primary particles constituting the secondary particle.

For example, the primary particle may be spaced apart from a neighboring primary particle in the secondary particle to form an internal pore. In addition, the primary particle may be in contact with an internal pore to form a surface present in the secondary particle, without forming a grain boundary by being in contact with a neighboring primary particle.

Meanwhile, a surface where the primary particle present at the outermost surface of the secondary particle is exposed to external air forms the surface of the secondary particle.

Wherein, as the average particle diameter (D50) of the primary particle is in the range of 0.1 to 5 µm, and preferably, 0.1 to 3 µm, the optimal density of a positive electrode manufactured using positive electrode active materials according to various embodiments of the present invention may be realized. In addition, the average particle diameter (D50) of the secondary particle may vary according to the number of aggregated primary particles, and may be 5 to 20 µm.

In addition, the primary particle and/or the secondary particle may be formed in a rod, oval, and/or irregular shape.

Wherein, the lithium composite oxide is represented by Formula 1 below.

[Formula 1] Li_{w}Ni_{1-(x+y+z)}CoₓM1_{y}M2_{z}O_{2+α}

Wherein,
M1 is at least one selected from Mn and Al,
M2 is at least one selected from Mn, P, Sr, Ba, B, Ti, Zr, Al, Hf, Ta, Mg, V, Zn, Si, Y, Sn, Ge, Nb, W, and Cu,
M1 and M2 are elements different from each other,
0.5≤w≤1.5, 0≤x≤0.50, 0≤y≤0.20, 0≤z≤0.20, and 0≤α≤0.02.

Wherein, the lithium composite oxide may be a lithium composite oxide with a layered crystal structure, which includes at least Ni and Co. In addition, the lithium composite oxide may be a high-Ni lithium composite oxide in which x+y+z of Formula 1 is 0.40 or less, and preferably 0.20 or less.

In one embodiment, as the positive electrode active material according to the present invention includes a lithium composite oxide in which a pore area and a pore shape are controlled, by using the positive electrode active material comprising the lithium composite oxide, it is possible to improve various electrochemical characteristics such as capacity, lifespan, and charge/discharge efficiency, which are important indicators for evaluating the performance of a lithium secondary battery.

Pore-related indicators such as the pore area, pore shape and porosity of the lithium composite oxide may be measured from a cross-sectional SEM image of the lithium composite oxide.

Specifically, when the average particle diameter (D50) of the lithium composite oxide is d, the average value of the major axis lengths (b) of pores observed from the cross-sectional SEM image may be less than 0.15d, and preferably, less than 0.137d. That is, the average value of the major axis lengths (b) of pores may be less than 15% of that of the lithium composite oxide. Wherein, the average particle (D50) of the lithium composite oxide indicates that of a lithium composite oxide as a secondary particle.

In addition, while the average value of the major axis lengths (b) of pores in the lithium composite oxide satisfies less than 15% of the average particle diameter (D50) of the lithium composite oxide, the average value of the ratios (b/a) of the major axis lengths (b) of pores to the minor axis lengths (a) of pores is adjusted to be 1 to 3.

In this case, the pore shapes may include a shape close to a sphere in which a major axis length (b) and a minor axis length (a) are almost the same (when the average value of the ratios (b/a) of the major axis lengths (b) of pores to the minor axis lengths (a) of the pores is 1) and a rod shape with a longer major axis length (b) than the minor axis length (a) (when the average value of the ratios (b/a) of the major axis lengths (b) of pores to the minor axis lengths (a) thereof is 3).

On the other hand, when the average value of the major axis lengths (b) of pores exceeds 15% of the average particle diameter (D50) of the lithium composite oxide, since the size of a pore in which the average value of the ratios (b/a) of the major axis lengths (b) of pores to the minor axis lengths (a) of the pores ranges from 1 to 3 is excessively large, not only is it disadvantageous for the particle strength of the lithium composite oxide, but it also causes the generation of cracks in the lithium composite oxide during charge/discharge of the lithium secondary battery. In addition, as the size of the pores in the lithium composite oxide increases excessively, the amount of a liquid electrolyte permeated into the pores increases, which may cause side reactions.

In addition, among the total pores observed from the cross-sectional SEM image of the lithium composite oxide, the proportion of pores in which the ratio (b/a) of the major axis length (b) of a pore to the minor axis length (a) of the pore exceeds than 3 may be less than 50%.

When the proportion of pores in which the ratio (b/a) of the major axis length (b) of a pore to the minor axis length (a) of the pore among the total pores, observed from the cross-sectional SEM image of the lithium composite oxide, exceeds 3 is more than 50%, not only is it disadvantageous for the particle strength of the lithium composite oxide, but it also causes the generation of cracks in the lithium composite oxide during charge/discharge of the lithium secondary battery. In addition, as the size of pores in the lithium composite oxide increases excessively, the amount of a liquid electrolyte permeated into the pores increases, which may cause side reactions.

In addition, while the average value of the major axis lengths (b) of pores in the lithium composite oxide is (0.x)d to (0.y)d, and the average value of the ratios (b/a) of the major axis lengths (b) of pores to the minor axis lengths (a) of the pores satisfies 1 to 3, the average area of pores observed from the cross-sectional SEM image of the lithium composite oxide may be 0.02 to 1.5 µm².

In addition, the occupancy rate of the pores in the cross-section of the lithium composite oxide observed from the cross-sectional SEM image of the lithium composite oxide may be 0.3 to 3.5%.

While the average value of the major axis lengths (b) of pores in the lithium composite oxide is less than 15%, and preferably less than 13.7% of the average particle diameter (D50) of the lithium composite oxide, and the average value of the ratios (b/a) of the major axis lengths (b) of pores to the minor axis lengths (a) of the pores satisfies 1 to 3, when the occupancy rate (porosity) of the pores in the cross-section of the lithium composite oxide is 0.3 to 3.5%, a better synergistic effect of electrochemical properties may be expected compared to a positive electrode active material in which only the porosity of the lithium composite oxide is within the above-described range.

In addition, as the surface of the lithium composite oxide included in a positive electrode active material is a region in which a side reaction with an electrolyte during the charging/discharging and/or storage of a lithium secondary battery may occur, the surface area of the positive electrode active material (e.g., expressed as an indicator, such as BET specific surface area) increases, and thus the possibility of side reactions increases. Therefore, the crystal structure in the surface of the positive electrode active material may undergo phase transformation (e.g., layered structure → rock salt structure). The phase transformation of the crystal structure in the surface of the positive electrode active material is pointed out as one of the causes of reducing the lifespan of the lithium secondary battery.

As suggested in the present invention, to control the pore area and the pore shape of the lithium composite oxide, when the proportions of ammonia and caustic soda, used in co-precipitation for synthesizing a precursor of the lithium composite oxide, are adjusted, it is possible to control the pore area and pore shape of the synthesized lithium composite oxide and adjust the BET specific surface area of the synthesized lithium composite oxide within the range of 0.2 to 2.0 m²/g.

In another embodiment, the positive electrode active material may further include a coating layer that covers at least a part of the surface of the lithium composite oxide.

Wherein, the coating layer may include an alloy oxide represented by Formula 2 below. That is, the coating layer may be defined as a region in which an alloy oxide represented by Formula 2 below is present.

[Formula 2] LiₐM3_{b}O_{c}

Wherein,
M3 is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Gd, and Nd,
0≤a≤10, 0<b≤8, and 2≤c≤13.

In addition, the coating layer may be configured to have different types of alloy oxides in one layer at the same time, or in separate layers.

The alloy oxide represented by Formula 2 may be physically and/or chemically bound to the lithium composite oxide. In addition, the alloy oxide may also be present while forming a solid with the lithium composite oxide.

The alloy oxide may be an oxide prepared by complexing an element represented by M3 with lithium, or an M3 oxide, and the oxide may be, for example, LiₐW_{b}O_{c}, LiₐZr_{b}O_{c}, LiₐTi_{b}O_{c}, LiₐNi_{b}O_{c}, LiₐB_{b}O_{c}, W_{b}O_{c}, Zr_{b}O_{c}, Ti_{b}O_{c} or B_{b}O_{c}. However, the above examples are merely provided for convenience to help understanding, and the oxides defined herein are not limited to the above-described examples.

In another embodiment, the alloy oxide may further include an oxide in which at least two elements represented by M3 are complexed with lithium, or an oxide in which at least two elements represented by M3 are complexed with lithium. The oxide in which at least two elements represented by M3 are complexed with lithium may be, for example, Liₐ(W/Ti)_{b}O_{c}, Liₐ(W/Zr)_{b}O_{c}, Liₐ(W/Ti/Zr)_{b}O_{c}, or Liₐ(W/Ti/B)_{b}O_{c}, but the present invention is not necessarily limited thereto.

Wherein, the alloy oxide may exhibit a concentration gradient that decreases from the surface to the center of the secondary particle. Accordingly, the concentration of the alloy oxide may be reduced from the outermost surface to the center of the secondary particle.

As described above, as the alloy oxide exhibits a concentration gradient which is reduced from the surface to the center of the secondary particle, residual Li present on the surface of the lithium composite oxide may be additionally reduced. In addition, it is possible to prevent the alloy oxide from lowering the crystallinity of the inner surface region of the lithium composite oxide. In addition, it is possible to prevent the overall structure of the positive electrode active material from collapsing due to the alloy oxide in an electrochemical reaction.

Additionally, the coating layer may include a first coating layer comprising at least one alloy oxide represented by Formula 2 and a second coating layer comprising at least one alloy oxide represented by Formula 2 and an oxide different from the oxide included in the first coating layer.

### Lithium secondary battery

According to another embodiment of the present invention, a positive electrode comprising a positive electrode current collector and a positive electrode active material layer formed on the positive electrode current collector may be provided. Wherein, the positive electrode active material may include lithium composite oxides according to various embodiments of the present invention as a positive electrode active material. Therefore, since the description of the positive electrode active material is the same as descried above, for convenience, the detailed description will be omitted, and other components that have not been described will be described.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may typically have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition comprising the positive electrode active material, a conductive material, and a binder included optionally as needed.

Wherein, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Still another aspect of the present invention provides an electrochemical device comprising the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. Wherein, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition comprising the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite comprising the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator is not particularly limited as long as it is generally used in a lithium secondary battery to separate a negative electrode from a positive electrode and provide a diffusion path for lithium ions, and particularly, the separator has low resistance to ion mobility of an electrolyte and an excellent electrolyte wettability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure comprising two or more layers thereof may be used. In addition, a conventional porous non-woven fabric, for example, a non-woven fabric formed of a high melting point glass fiber or a polyethylene terephthalate fiber may be used. In addition, a coated separator comprising a ceramic component or a polymer material may be used to ensure thermal resistance or mechanical strength, and may be optionally used in a single- or multilayered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the liquid electrolyte may exhibit excellent performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Wherein, the additive(s) may be included at 0.1 to 5 wt% with respect to the total weight of the electrolyte.

Since the lithium secondary battery comprising the positive electrode active material according to the present invention stably exhibits excellent discharge capacity, excellent output characteristics and excellent lifespan characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module comprising a plurality of battery cells.

According to still another exemplary embodiment of the present invention, a battery module comprising the lithium secondary battery as a unit cell and/or a battery pack comprising the same may be provided.

The battery module or the battery pack may be used as a power source of any one or more medium-to-large devices comprising a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### (1) Example 1

A spherical Ni_{0.91}Co_{0.08}Mn_{0.01}(OH)₂ hydroxide precursor was synthesized by a co-precipitation method.

Specifically, in a 90 L reactor, NaOH was added to a 2.0 M composite transition metal sulfuric acid aqueous solution in which nickel sulfate, cobalt sulfate and manganese sulfate were mixed in a molar ratio of 91:8:1 to be 1.8 M based on the transition metal concentration in the composite transition metal sulfuric acid aqueous solution, and NH₄OH was added to be 0.8 M based on the transition metal concentration in the composite transition metal sulfate aqueous solution.

The pH in the reactor was maintained at 11.5, the reactor temperature was maintained at 60 °C, and N₂, which is an inert gas, was introduced into the reactor to prevent oxidation of the prepared precursor. After synthesis and stirring, washing and dehydration were performed using filter press (F/P) equipment, thereby obtaining a Ni_{0.91}Co_{0.08}Mn_{0.01}(OH)₂ hydroxide precursor.

Subsequently, after mixing LiOH (Li/(Ni+Co+Mn) mol ratio = 1.01) with the synthesized precursor, an O₂ atmosphere was maintained in a furnace, the temperature was increased up to 800 °C at a rate of 2 °C per minute to perform thermal treatment for 10 hours, thereby obtaining a lithium composite oxide.

Afterwards, after addition of distilled water to the lithium composite oxide, the lithium composite oxide was washed for 1 hour, and the washed lithium composite oxide was filtered and dried, thereby obtaining a positive electrode active material.

### (2) Example 2

A positive electrode active material was prepared in the same manner as in Example 1, except that NaOH was added to be 1.6 M based on the transition metal concentration in the composite transition metal sulfate aqueous solution, and NH₄OH was added to be 0.4 M based on the transition metal concentration of the composite transition metal sulfate aqueous solution.

### (3) Example 3

A positive electrode active material was prepared in the same manner as in Example 1, except that NaOH was added to be 2.2 M based on the transition metal concentration in the composite transition metal sulfate aqueous solution, and NH₄OH was added to be 1.2 M based on the transition metal concentration of the composite transition metal sulfate aqueous solution.

### (4) Example 4

A spherical Ni_{0.91}Co_{0.08}Mn_{0.01}(OH)₂ hydroxide precursor was synthesized by a co-precipitation method.

Specifically, in a 90 L reactor, NaOH was added to a 1.5 M composite transition metal sulfuric acid aqueous solution in which nickel sulfate, cobalt sulfate and manganese sulfate were mixed in a molar ratio of 91:8:1 to be 1.6 mol based on the transition metal concentration in the composite transition metal sulfuric acid aqueous solution, and NH₄OH was added to be 0.4 mol based on the transition metal concentration in the composite transition metal sulfate aqueous solution.

The pH in the reactor was maintained at 11.5, the reactor temperature was maintained at 60 °C, and N₂, which is an inert gas, was introduced into the reactor to prevent oxidation of the prepared precursor. After synthesis and stirring, washing and dehydration were conducted using filter press (F/P) equipment, thereby obtaining a Ni_{0.91}Co_{0.08}Mn_{0.01}(OH)₂ hydroxide precursor.

Subsequently, after mixing LiOH (Li/(Ni+Co+Mn) mol ratio = 1.01) and 0.5 mol% Zr with the synthesized precursor, an O₂ atmosphere was maintained in a furnace, the temperature was increased up to 700 °C at a rate of 2 °C per minute to perform thermal treatment for 10 hours, thereby obtaining a lithium composite oxide.

Afterwards, after addition of distilled water to the lithium composite oxide, the lithium composite oxide was washed for 1 hour, and the washed lithium composite oxide was filtered and dried, thereby obtaining a positive electrode active material.

### (5) Example 5

A positive electrode active material was prepared in the same manner as in Example 1, except that 1 mol% of Al₂O₃, 0.25 mol% of TiO₂ and 0.05 mol% of ZrO₂ were mixed with respect to the lithium composite oxide before washing of the lithium composite oxide, and thermal treatment was further performed for 10 hours by increasing the temperature up to 680 °C at a rate of 2 °C per minute while maintaining an O₂ atmosphere.

### (6) Example 6

A positive electrode active material was prepared in the same manner as in Example 1, except that a spherical Ni_{0.80}Co_{0.10}Mn_{0.10}(OH)₂ hydroxide precursor synthesized by a co-precipitation method was used.

### (7) Comparative Example 1

A positive electrode active material was prepared in the same manner as in Example 1, except that NaOH was added to be 1.2 M based on the transition metal concentration of the composite transition metal sulfate aqueous solution, and NH₄OH was added to be 0.3 M based on the transition metal concentration of the composite transition metal sulfate aqueous solution.

### (8) Comparative Example 2

A positive electrode active material was prepared in the same manner as in Example 1, except that NaOH was added to be 2.5 M based on the transition metal concentration of the composite transition metal sulfate aqueous solution, and NH₄OH was added to be 1.5 M based on the transition metal concentration of the composite transition metal sulfate aqueous solution.

### (9) Comparative Example 3

A positive electrode active material was prepared in the same manner as in Example 1, except that NaOH was added to be 1.8 M based on the transition metal concentration of the composite transition metal sulfate aqueous solution, and NH₄OH was added to be 1.5 M based on the transition metal concentration of the composite transition metal sulfate aqueous solution.

### (10) Comparative Example 4

A positive electrode active material was prepared in the same manner as in Example 1, except that NaOH was added to be 2.5 M based on the transition metal concentration of the composite transition metal sulfate aqueous solution, and NH₄OH was added to be 0.4 M based on the transition metal concentration of the composite transition metal sulfate aqueous solution.

### (11) Comparative Example 5

A positive electrode active material was prepared in the same manner as in Example 1, except that NaOH was added to be 1.2 M based on the transition metal concentration of the composite transition metal sulfate aqueous solution, and NH₄OH was added to be 1.5 M based on the transition metal concentration of the composite transition metal sulfate aqueous solution.

### Preparation Example 2. Manufacture of lithium secondary battery

A positive electrode slurry was prepared by dispersing 92 wt% of each of the positive electrode active materials prepared according to Preparation Example 1, 4 wt% of artificial graphite and 4 wt% of a PVDF binder in 30 g of N-methyl-2-pyrrolidone (NMP). The positive electrode slurry was applied to an aluminum thin film having a thickness of 15 µm and vacuum-dried at 135 °C, thereby manufacturing a positive electrode for a lithium secondary battery.

A coin battery was manufactured using a lithium foil as a counter electrode for the positive electrode, a porous polyethylene film (Celgard 2300, thickness: 25 µm) as a separator, and a liquid electrolyte in which LiPF₆ was present at a concentration of 1.15M in a solvent in which ethylene carbonate and ethyl methyl carbonate are mixed in a volume ratio of 3:7.

### Experimental Example 1. SEM analysis of positive electrode active material

The pore characteristics of the cross-section of a lithium composite oxide included in the positive electrode active material were confirmed by photographing a cross-sectional SEM image of the positive electrode active material prepared according to Preparation Example 1.

Specifically, a cross-sectional SEM image obtained after cross-sectioning the lithium composite oxide included in the positive electrode active material using FIB (Ga-ion source) was taken, and the average particle diameter (D50) of the lithium composite oxide, the average value of the major axis lengths (b) of pores, the average value of the minor axis lengths (a) of pores, the average value of b/a, the average area of pores, and the occupancy rate of pores were measured from the cross-sectional SEM image. The measurement results are shown in Table 1 below.

**[Table 1]**

| Classification | Example 1 | Example 2 | Example 3 | Example 4 | Example 5 | Example 6 |
|---|---|---|---|---|---|---|
| D50 (µm) | 13.0 | 13.1 | 13.0 | 13.1 | 13.1 | 13.0 |
| Minor axis length (a)(µm) | 0.2 | 0.3 | 0.3 | 0.2 | 0.4 | 0.2 |
| Major axis length (b)(µm) | 0.6 (0.046d) | 0.9 (0.069d) | 0.7 (0.054d) | 0.5 (0.038d) | 1.1 (0.084d) | 0.5 (0.038d) |
| b/a | 3.0 | 3.0 | 2.3 | 2.5 | 2.8 | 2.5 |
| Proportion of pores with b/a greater than 3 of total pores (%) | 12 | 19 | 27 | 31 | 45 | 17 |
| Average pore area (µm²) | 0.7 | 0.9 | 1.1 | 1.0 | 0.9 | 0.8 |
| Porosity (%) | 1.2 | 1.6 | 2.1 | 2.6 | 2.9 | 1.3 |

| | | | | | | |
|---|---|---|---|---|---|---|
| ^{∗}The notation in parentheses of the major axis length indicates a value relative to D50 (d). | | | | | | |

**[Table 2]**

| Classification | Comparative Example 1 | Comparative Example 2 | Comparative Example 3 | Comparative Example 4 | Comparative Example 5 |
|---|---|---|---|---|---|
| D50 (µm) | 13.1 | 13.0 | 13.0 | 13.1 | 13.1 |
| Minor axis length (a)(µm) | 0.1 | 1.2 | 0.6 | 0.5 | 0.3 |
| Major axis length (b)(µm) | 0.2 (0.015d) | 4.3 (0.331d) | 2.8 (0.215d) | 2.3 (0.176d) | 1.8 (0.137d) |
| b/a | 2.0 | 3.6 | 4.7 | 4.6 | 6.0 |
| Proportion of pores with b/a greater than 3 of total pores (%) | 0 | 61 | 53 | 47 | 39 |
| Average pore area (µm²) | 0.01 | 1.6 | 1.4 | 1.3 | 1.1 |
| Porosity (%) | 0.1 | 3.9 | 3.0 | 2.7 | 2.1 |

| | | | | | |
|---|---|---|---|---|---|
| ^{∗} The notation in parentheses of the major axis length indicates a value relative to D50 (d). | | | | | |

### Experimental Example 2. Measurement of particle strength of positive electrode active material

In the manufacture of a positive electrode for a lithium secondary battery using a positive electrode active material, a slurry containing a positive electrode active material was applied to a positive electrode current collector, and then dried and pressed. Wherein, during rolling under a high pressure, the performance of the positive electrode active material may deteriorate as the particle of the positive electrode active material applied to the positive electrode current collector collapses.

In this experimental example, to confirm the change in strength of the positive electrode active material according to the composition of the aggregate of a plurality of secondary particles included in the positive electrode active material, the positive electrode active materials prepared according to Examples 1 to 3 and Comparative Examples 1, 2 and 5 were dried in a vacuum oven at 60 °C for 12 hours, and then one particle (lithium composite oxide) corresponding to D50 was selected to measure a fracture strength (a pressure when the particle is broken) of the particle.

Table 3 below shows the average value of the measured values after measuring the facture strength for each positive electrode active material 10 times.

**[Table 3]**

| Classification | Example 1 | Example 2 | Example 3 | Comparative Example 1 | Comparative Example 2 | Comparative Example 5 |
|---|---|---|---|---|---|---|
| Fracture strength (MPa) | 102 | 95 | 98 | 112 | 79 | 87 |

Referring to the results in Table 3, it can be confirmed that the positive electrode active materials according to Examples 1 to 3 were measured to have a slightly lower fracture strength than the positive electrode active material (porosity: 0.1%) according to Comparative Example 1 in which there were almost no pores in the positive electrode active material, but exhibited improved fracture strengths compared to the positive electrode active materials according to Comparative Examples 2 and 5. Particularly, comparing the positive electrode active material of Example 3 with the positive electrode active material of Comparative Example 5, it can be confirmed that even with the same porosity, the fracture strength of the positive electrode active material according to Example 3 is higher than that of the other.

That is, according to the present invention, it can be confirmed that the pore area and the pore shape of a lithium composite oxide included in the positive electrode active material are controlled by adjusting the proportions of ammonia and caustic soda, used in co-precipitation for synthesizing a precursor of the positive electrode active material, which can contribute to an improvement in the stability of the positive electrode active material.

### Experimental Example 3. Evaluation of capacity and lifespan characteristics of lithium secondary battery

Charge and discharge capacities were measured through charge/discharge experiments performed on the lithium secondary battery (coin cell) manufactured in Preparation Example 2 using an electrochemical analyzer (Toyo, Toscat-3 100) at 25 °C in a voltage range of 3.0V to 4.3V with a discharging rate of 0.1C.

In addition, 50 cycles of charging/discharging were performed on the same lithium secondary battery at 25 °C, within a driving voltage range of 3.0V to 4.4V under a 1C/1C condition, and the ratio of the discharge capacity at the 50^{th} cycle to the initial capacity (cycling capacity retention) was measured.

The measurement results are shown in Table 4 below.

**[Table 4]**

| Classification | Charge capacity (mAh/g) | Discharge capacity (mAh/g) | Charge/discharge efficiency (%) | Retention@50cy (%) |
|---|---|---|---|---|
| Example 1 | 226.3 | 211.7 | 93.5 | 93.9 |
| Example 2 | 227.5 | 210.9 | 92.7 | 94.1 |
| Example 3 | 226.7 | 211.1 | 93.1 | 94.3 |
| Example 4 | 225.1 | 210.0 | 93.3 | 94.8 |
| Example 5 | 225.9 | 210.2 | 93.1 | 94.7 |
| Example 6 | 225.2 | 211.1 | 93.7 | 93.8 |
| Comparative Example 1 | 223.8 | 207.3 | 92.6 | 94.2 |
| Comparative Example 2 | 226.7 | 209.5 | 92.4 | 90.3 |
| Comparative Example 3 | 227.6 | 210.3 | 92.4 | 89.7 |
| Comparative Example 4 | 226.8 | 209.9 | 92.5 | 91.1 |
| Comparative Example 5 | 226.8 | 210.7 | 92.9 | 90.7 |

Referring to the results in Table 4, by adjusting the proportions of ammonia and caustic soda, used in co-precipitation for synthesizing a precursor, without simply controlling the porosity of a lithium composite oxide included in a positive electrode active material, it can be confirmed that, when the pore area and the pore shape in the lithium composite oxide are controlled, the electrochemical properties of the positive electrode active material can be further improved.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

## Claims

1. A positive electrode active material, comprising:
a lithium composite oxide represented by Formula 1 below and capable of lithium intercalation/deintercalation,
[Formula 1] Li_{w}Ni_{1-(x+y+z)}CoₓM1_{y}M2_{z}O_{2+α}
Wherein,
M1 is at least one selected from Mn and Al,
M2 is at least one selected from Mn, P, Sr, Ba, B, Ti, Zr, Al, Hf, Ta, Mg, V, Zn, Si, Y, Sn, Ge, Nb, W, and Cu,
M1 and M2 are elements different from each other,
0.5≤w≤1.5, 0≤x≤0.50, 0≤y≤0.20, 0≤z≤0.20, and 0≤α≤0.02,
wherein, the average value of ratios (b/a) of the major axis lengths (b) of the pores to the minor axis lengths (a) of the pores, observed from a cross-sectional scanning electron microscope (SEM) image of the lithium composite oxide, is 1 to 3.

2. The positive electrode active material of claim 1, wherein when the average particle diameter (D50) of the lithium composite oxide is d, the average value of the major axis length (b) of a pore observed from a cross-sectional SEM image of the lithium composite oxide is less than 0.15d.

3. The positive electrode active material of claim 1, wherein, among the total pores observed from the cross-sectional SEM image of the lithium composite oxide, the proportion of pores in which the ratio (b/a) of the major axis length (b) of the pore to the minor axis length (a) of the pore exceeds 3 is less than 50%.

4. The positive electrode active material of claim 1, wherein the average area of pores observed from a cross-sectional SEM of the lithium composite oxide is 0.02 to 1.0 µm².

5. The positive electrode active material of claim 1, wherein the average particle diameter (D50) of the lithium composite oxide is 5 to 20 µm.

6. The positive electrode active material of claim 1, wherein the occupancy rate of the pores in the cross-section of the lithium composite oxide observed from the cross-sectional SEM image of the lithium composite oxide is 0.3 to 3.5%.

7. The positive electrode active material of claim 1, wherein the BET specific surface area of the lithium composite oxide is 0.2 to 2.0 m²/g.

8. The positive electrode active material of claim 1, wherein the sum of the LiOH and Li₂CO₃ contents with respect to the total weight of the positive electrode active material is 1.0 wt% or less.

9. The positive electrode active material of claim 1, further comprising:
an alloy oxide represented by Formula 2 below on at least a part of the surface of the lithium composite oxide,
[Formula 2] LiₐM3_{b}O_{c}
Wherein,
M3 is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Gd, and Nd,
0≤a≤10, 0<b≤8, and 2≤c≤13.

10. A positive electrode comprising the positive electrode active material of any one of claims 1 to 9.

11. A lithium secondary battery using the positive electrode of claim 10.
